# EUROPEAN PATENT SPECIFICATION

(11) **EP 2 224 684 B1**
(45) Date of publication and mention of the grant of the patent: **13.02.2013**
(21) Application number: 09154023.7
(22) Date of filing: 27.02.2009
(51) Int. Cl.: H04W 4/20, H04L 29/08

(54) **Mobile wireless communications device to receive advertising messages based upon keywords in voice communications and related methods**
Mobile drahtlose Kommunikationsvorrichtung zum Empfang von Werbenachrichten basierend auf Schlüsselwörtern in Sprachkommunikationen und zugehörige Verfahren
Dispositif de communications sans fil portable pour la réception de messages publicitaires basés sur des mots clé dans des communications vocales et procédés apparentés

(43) Date of publication of application: 01.09.2010
(73) Proprietor: Research In Motion Limited, Waterloo, ON N2L 3W8 (CA)
(72) Inventor: Robertson, Ian, Waterloo, Ontario N2L 5Z5 (CA); Mallick, Martyn, Waterloo, Ontario N2V 1K8 (CA)
(74) Representative: Roberts, Gwilym Vaughan

(56) References cited:
- US-A1- 2007 201 636
- US-A1- 2007 249 406

## Description

### Technical Field

The present disclosure relates to the field of advertising and, more particularly, to the delivery of advertising messages to mobile wireless communications devices and related methods.

### Background

The pervasiveness of electronic communication and, in particular, mobile wireless communication, has led to a desire for the delivery of advertising to mobile wireless communications devices. In some applications, mobile advertising on such mobile wireless communications devices may be similar to more traditional advertising venues, such as television, radio, and print. For example, a mobile wireless communications device that has the capability of displaying video to a user may display a pre-recorded advertisement to the user. Indeed, a television commercial may even be displayed to the user. Similarly, a mobile wireless communications device may play a pre-recorded audio advertisement (such as a radio ad) to a user prior to the user making a telephone call.

There are, however, some fundamental differences between traditional advertising venues and mobile wireless communications devices. For example, most television programs cater to a specific demographic (e.g. males aged 18-35) and advertising displayed during those programs can be directed to products or services that may be desirable to those in that demographic. Differently, mobile wireless communications devices are used by members of many demographics.

United States Patent Publication No. 2007/0249406 A1 discloses a system and method for receiving information in a communication terminal during a voice conversation session with a remote communication terminal. After initiating the voice conversation between a first and a second communication terminal, audio signals of the voice conversation are passed to a speech recognition engine to identify a keyword from the voice conversation. The identified keywords are then used for locating and retrieving information related to the keyword, and the retrieved information is presented on the display of at least one of the first and second communication terminals.

United States Patent Publication No. 2007/0201636 A1 discloses a system, method and computer program product for providing targeted messages to a person using telephony services by generating user profile information from telephony data and using the user profile information to retrieve targeted messages.

United States Patent Publication No. 20b6/0173915 A1 discloses a technology platform for the delivery of dynamic, interactive audio advertisements played in response to a consumer initiated request for information via a telephone. The platform provides advertising supported information services that are related to past responses made to a specific consumer who initiated the request. In one specific embodiment, a consumer uses a telephone is connected to a call processing system. The call processing system receives a request for information from the consumer. In determining a response, the consumer's request is examined to identify the customer that originated the request. This in turn identifies a profile file associated with the consumer, which then permits the system to determine one or more advertisement selection parameters. The customer profile may comprise one or more records of past requests from the identified customer station.

Accordingly, it would be useful for mobile wireless communications devices to be able to choose which products or services to advertise when the demographic of the recipient is unknown and deliver advertisements to those users who may be most interested in purchasing the goods and/or services being advertised.

The invention is defined in the independent claims. Some optional features of the invention are defined in the dependent claims.

### Brief Description of the Drawings

FiG. 1 is a block diagram of a communications system in accordance with an example embodiment of the present disclosure

FIG. 2A shows the mobile wireless communications device of FIG. 1 performing a voice communication, according to an example embodiment.

FIG. 2B shows the mobile wireless communications device of FIG. 1 presenting an advertisement message after the voice communication, according to an example embodiment.

FIG. 3 is a more detailed block diagram of the communications system of FIG. 1, according to an example embodiment.

FIG. 4 is a flowchart of a method of operating a communications system in accordance with an example embodiment of the present disclosure.

FIG. 5 is a flowchart of a method of operating a mobile wireless communications device in accordance with an example embodiment of the present disclosure.

FIG. 6 is a schematic block diagram illustrating exemplary components of a mobile wireless communications device that may be used with the communications system of FIG. 1, according to an example embodiment.

### Detailed Description

The present description is made with reference to the accompanying drawings, in which various example embodiments are shown. However, many different example embodiments may be used, and thus the description should not be construed as limited to the example embodiments set forth herein. Rather, these example embodiments are provided so that this disclosure will be thorough and complete. Like numbers refer to like elements throughout.

A communications system may include an advertising server for sending advertisement messages based upon keywords and at least one mobile wireless communications device. The at least one mobile wireless communications device may include at least one audio transducer, a wireless transceiver, and a processor. The processor may cooperate with the at least one audio transducer and the wireless transceiver for recognizing keywords in voice communications, and may cooperate with the advertising server to receive advertisement messages therefrom based upon the keywords.

The at least one mobile wireless communications device may further include a display and the processor may visually present received advertisement messages on the display. Additionally or alternatively, the processor may audibly present received advertisement messages via the at least one audio transducer.

The processor may present a given received advertising message during an associated voice communication. Additionally or alternatively, the at least one mobile wireless communications device may further include a memory cooperating with the processor for storing received advertisement messages and the processor may present a given stored received advertising message after an associated voice communication.

The at least one mobile wireless communications device may further include at least one input device cooperating with the processor to permit user selection of presentation of a given received advertising message. The advertising server may further cooperate with the at least one mobile wireless communications device to generate an advertisement message history. Furthermore, the advertising server may selectively send a given advertisement message based upon an associated advertisement message history.

A method aspect is directed to a method of operating communications system. The method may include sending, with an advertising server, advertisement messages based upon keywords to at least one mobile wireless communications device. The method may further include recognizing, with the at least one mobile wireless communications device, keywords in voice communications, and cooperating with the advertising server to receive advertisement messages therefrom based upon the keywords.

Another method aspect is directed to a method of using at least one mobile wireless communications device operable based upon payment of a wireless network user subscription fee to receive advertisement messages based upon keywords from an advertising server. The method may include recognizing keywords in voice communications, and cooperating with the advertising server to receive the advertisement messages therefrom based upon the keywords. The method may also include presenting the advertisement messages for a discount of the wireless network user subscription fee.

Yet another aspect is directed to a computer readable medium to store computer executable modules for execution by a processor of a mobile wireless communications device operable based upon payment of a wireless network user subscription fee. The computer executable modules may include a computer executable advertising module for recognizing keywords in voice communications, and cooperating with an advertising server to receive advertisement messages based upon keywords therefrom. A computer executable presentation module may be for presenting the advertisement messages for a discount of the wireless network user subscription fee.

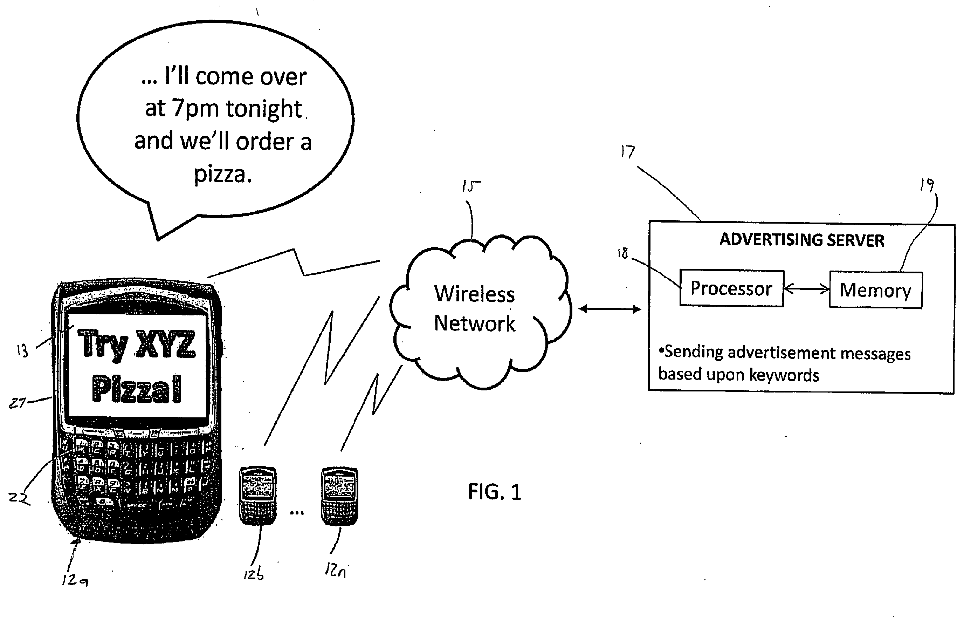

With reference to FIGS. 1-3, a communications system **10** is now described. The communications system **10** includes a plurality of mobile wireless communications devices **12a-12n** for performing voice communications. The mobile wireless communications devices **12a-12n** may each include a processor **24** coupled to a display **13**, a memory **23**, a wireless transceiver **20**, an audio transducer **21**, and an input device **22**. The input device **22** is illustratively a keyboard, for example. Of course, the display **13** may be a touch sensitive screen and may therefore also serve as the input device **22**. In addition, the mobile wireless communications devices **12a-12n** may include a portable housing **27** and a rechargeable battery (not shown).

The plurality of mobile wireless communications devices **12a-12n** may communicate with the wireless network **15** based upon a wireless network user subscription fee. For example, the wireless network **15** may be a cellular network and the plurality of mobile wireless communications devices **12a-12n** may be operable to communicate therewith through the purchase of a cellular network access plan. Of course, the plurality of mobile wireless communications devices **12a-12n** need not communicate with the wireless network **15** based upon a wireless network user subscription fee in all example embodiments and it should be understood that this feature is optional.

The mobile wireless communications device **12a,** or devices **12a-12n,** may each be a cellular telephone, smartphone, personal digital assistant (PDA), portable computer, or another suitable device. Of course, the mobile wireless communications devices **12a-12n** may each be a different device. For clarity of explanation, only the single mobile wireless communications device **12a** will be referred to hereinafter.

As discussed above, the wireless network 15 may include a cellular network and may employ at least one cellular protocol, such as Global System for Mobile Communications (GSM) or Code Division Multiple Access (CDMA). Those skilled in the art will understand that cellular protocols such as GSM and CDMA may enable the sending and receiving of SMS (Short Messaging Service) and MMS (Multimedia Messaging Service) messages and may provide connectivity with the Internet. The wireless network **15** may additionally or alternatively include a wireless data network employing a wireless protocol, such as Wi-Fi or WiMAX.

The processor **24** of the mobile wireless communications device **12a** executes an advertising module **25** stored in the memory **23** that cooperates with the audio transducer **21** and the wireless transceiver **20** for recognizing keywords in voice communications. The advertising module **25** executes a voice recognition routine, as known to those of skill in the art, to analyze the voice communications and to recognize the keywords therein. The voice recognition routine may be a same routine that also provides the mobile wireless communications device **12a** with voice activated dialing functionality.

It should be understood that voice communications include both incoming and outgoing voice communications between the mobile wireless communications device **12a** and another mobile wireless communications device or land based telephone. Furthermore, voice communications include voice notes saved on the memory **23** of the mobile wireless communications device **12a** and video recorded by and saved on the memory. In addition, voice communications include video files downloaded from another mobile wireless communications device or the Internet to the memory **23** of the mobile wireless communications device **12a.**

Keywords are one or more words indicating a product or service in which a user may be interested in purchasing. For example, "pizza," "wine," or "movie rental" might be key words. If the keywords include a plurality of words, these words need not be sequential. The list of keywords may be stored in the memory **23** of the mobile wireless communications device **12a,** may be stored on a memory **19** of the advertising server **17** (discussed below), or may be stored on both the mobile wireless communications device and the advertising server. If the list of keywords is stored in the memory **23** of the mobile wireless communications device **12a,** that list may be periodically or aperiodically updated via a communication between the mobile wireless communications device and the advertising server **17**.

The advertising server **17** includes a processor **18** and a memory **19** coupled thereto. The advertising server **17** may communicate wirelessly with the wireless network **15** or, alternatively, may communicate with a wired node of the wireless network. The advertising server **17** sends advertisement messages to the mobile wireless communications device **12a** based upon the keywords. In some example embodiments, the advertising server **17** sends the advertisement messages to the mobile wireless communications device **12a** in exchange for a discount of the user subscription fee to the wireless network **15**. This discount may entice users to agree to have the advertisement messages presented.

The user subscription fee may be, for example, a monthly subscription fee, a yearly subscription fee, or a subscription fee based upon a number of minutes of access to the wireless network **15**. The discount of the user subscription fee may be, for example, a discount of the entire subscription fee, or a discount of part of the subscription fee. Alternatively, other user subscription fee structures or discount structures may be employed.

The advertising module **25** may send one or more keywords to the advertising server **17** as they are recognized, or may store a recognized keyword list in the memory **23** to be sent to the advertising server at a later time.

The advertising module **25** may visually present received advertisement messages on the display and may present a given received advertising message during an associated voice communication. FIG. 1 illustrates the mobile communications system **10** operating in this fashion. In FIG. 1, the mobile wireless communications device **12a** is engaged in voice communications via the wireless network **15.** Playing through the audio transducer **21** is a snippet of a conversation which says "I'll come over at 7pm tonight and we'll order a pizza." "Pizza" is a keyword in this example and has been recognized by the processor **24** of the mobile wireless communications device **12a** as such. The advertising server **17** has sent an advertising message based upon the keyword "pizza" to the mobile wireless communications device **12a,** and the processor **24** has displayed the advertising message on the display **13** during the voice communication associated with the keyword. The advertising message is illustratively for the user to "Try XYZ Pizza!" (and thus based upon the keyword "pizza.") Additionally or alternatively, the processor **24** may audibly present received advertisement messages via the audio transducer **21**.

Of course, in some applications, such a visual advertisement message may include, for example, a phone number, an address, a website address, or any kind of visual content that the advertiser chooses to include. The visual content may be "active" in that a user may interact with the visual content in order to initiate an action of some kind. The user may be able to interact with a phone number in order to place a phone call to that phone number, with an address in order to display a map corresponding to that address, or with a website address in order to view that website. Other types of user interaction with the visual contact are also possible.

Those of skill in the art will appreciate that the advertisement message may cause the mobile wireless communications device **12a** to launch an application. For example, the advertisement message may include a video file and may cause the mobile wireless communications device **12a** to launch a video viewing application to view the video. As another example, the advertisement message may include a web page or a link thereto and may cause the mobile wireless communications device **12a** to launch a web browser to view the web page.

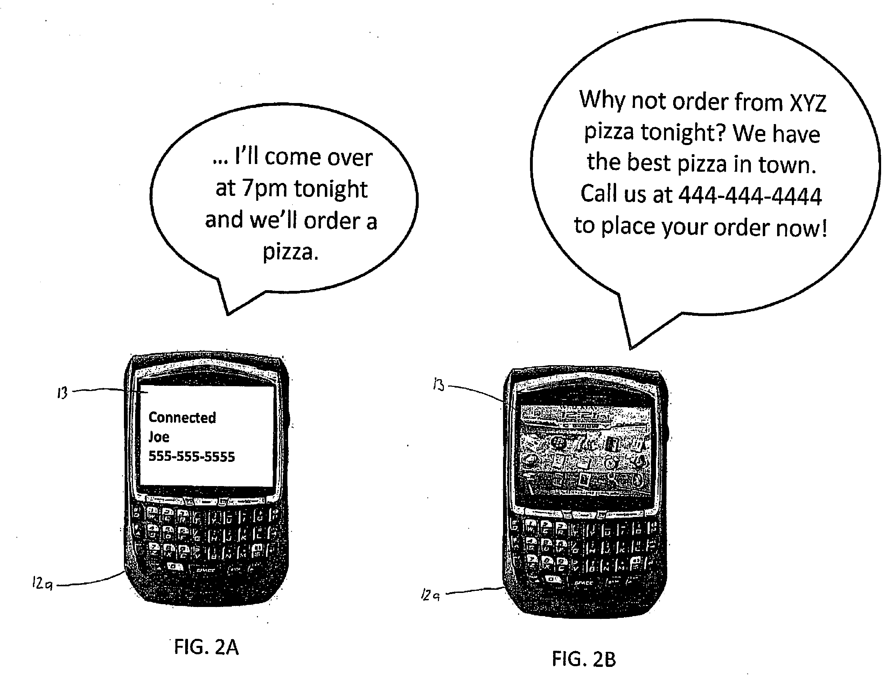

Rather than presenting advertisement messages as they are received, a database module **26** may be stored in the memory **23** and executed by the processor **24** to store received advertisement messages in the memory **23** for presentation at a later point in time, such as after an associated voice communication. FIGS. 2A and 2B illustrate this feature. In FIG. 2A, the mobile wireless communications device **12a** is engaged in voice communications via the wireless network **15**. Playing through the audio transducer **21** is a snippet of a conversation which says "I'll come over at 7pm tonight and we'll order a pizza." "Pizza" is a keyword in this example and has been recognized by the processor **24** of the mobile wireless communications device **12a** as such.

The advertising server **17** has sent an advertisement message based upon the keyword "pizza" to the mobile wireless communications device **12a** and the processor **24** has stored the advertisement message in the memory **23**. In FIG. 2B, the mobile wireless communications device **12a** is no longer engaged in voice communications and is instead audibly presenting the advertisement message via the audio transducer **21**. The audible advertisement message is illustratively "Why not order from XYZ pizza tonight? We have the best pizza in town! Call us at 444-444-4444 to place your order now!" This may advantageously prompt the user to order from XYZ pizza.

The advertising server **17** and the mobile wireless communications device **12a** may further cooperate to generate an advertisement message history. The advertising server **17** may selectively send the advertisement messages based upon the advertisement message history associated with the mobile wireless communications device **12a**. This feature may prevent a user from to the same audio advertisement multiple times in a row. Additionally or alternatively, this may help ensure that the user listens to the same audio advertisement a desired number of times. Of course, the discount of the wireless network user subscription fee may be based upon the number of audio advertisements that the user has listened to. Of course, the advertisement message history need not be kept in all applications and it should be understood that this feature is optional.

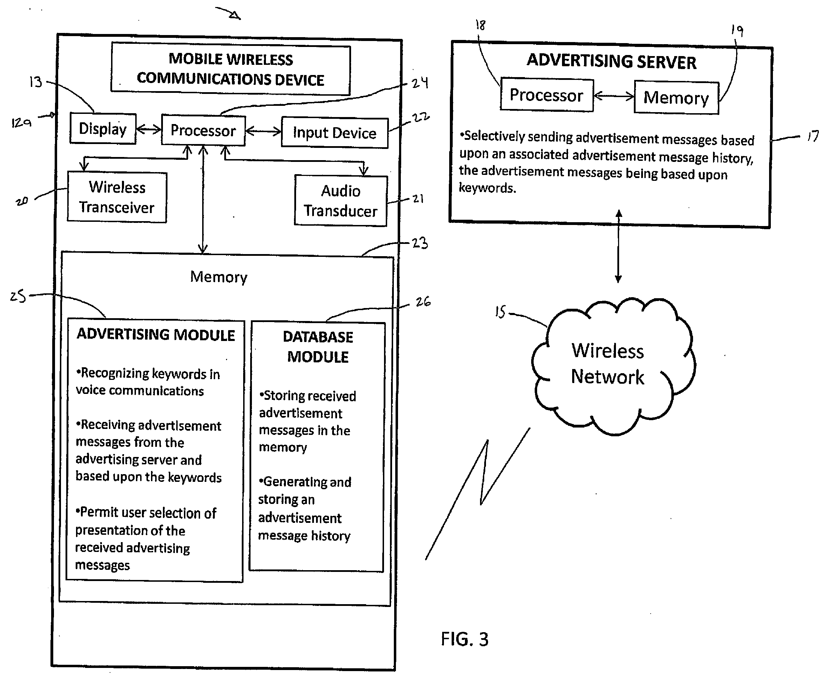

In the illustrated example embodiment (FIG. 3), a database module **26** of the mobile wireless communications device **12a** generates the advertisement message history and stores the advertisement message history in the memory **23**. The database module **26** may then transfer that history to the advertising server **17** immediately after generation or at a later time. This would allow the advertisement message history to be accurately recorded even if the mobile wireless communications device **12a** is not in communication with the wireless network **15** during presentation of the advertisement messages.

In other applications, the processor **18** of the advertising server **17** may generate and store the advertisement message history in its memory **19**. In such an application, the advertising server **17** may transfer the advertisement message history to the mobile wireless communications device **12a.** Further, in some applications, both the advertising server **17** and the at least one mobile wireless communications device **12a** may store the advertisement message history.

The mobile wireless communications device **12a** may optionally allow a user to skip presentation of an advertisement message if desired. The processor **24** of the mobile wireless communications device **12a** may display a prompt on the display **13** asking a user if he or she would like to skip presentation of the advertisement message and the mobile wireless communications device may accept an input via a keypad **22** or other input device. The mobile wireless communications device **12a** may skip presentation of the advertisement message based upon that input. This feature allows a user to presentation of an advertisement message that he or she is not interested in. Alternatively, the mobile wireless communications device **12a** may not explicitly prompt the user to skip an advertisement message, but the user may instead use a particular input (for example, the keypad **22**) to skip an advertisement message without being prompted.

A selected advertisement history may be stored in the memory **19** of the advertising server **17** or by the database module **26** of the mobile wireless communications device **12a.** This history may indicate what advertisement messages that a user has viewed or listened to. Additionally or alternatively, this history may indicate what advertisement messages that the user has skipped. The advertising server **17** may selectively send the advertisement messages to the mobile wireless communications device **12a** based upon this selected advertisement message history. For example, if this history indicates that a large percentage of advertisement messages for takeout pizza restaurants were skipped, the advertising server **17** may instead send advertisement messages for eat-in pizza restaurants.

Storage of the selected advertisement message history in both the memory **23** of the mobile wireless communications device **12a** and the memory **19** of the advertising server **17** may facilitate a more complete history. For example, sometimes an advertisement message may be presented when the mobile wireless communications device **12a** is not connected to the wireless network **15** (e.g. the user is on an airplane or in an area without wireless network coverage). If the mobile wireless communications device **12a** stores a selected advertisement message history, a record of the advertisement messages selected during this time may not be lost. Once the mobile wireless communications device **12a** reconnects to the wireless network **15**, it may send its selected advertisement message history to the advertising server 17.

Since the above described features may allow for a user to skip presentation of the advertisement messages, it should be understood that the mobile wireless communications device **12a** may alter the discount of the wireless network user subscription fee based upon the user section of advertisement messages or based upon the selected advertisement message history. For example, the discount may be decreased if a certain percentage of advertisement messages are skipped. Similarly, the discount may be increased if a certain percentage of the advertisement messages are not skipped.

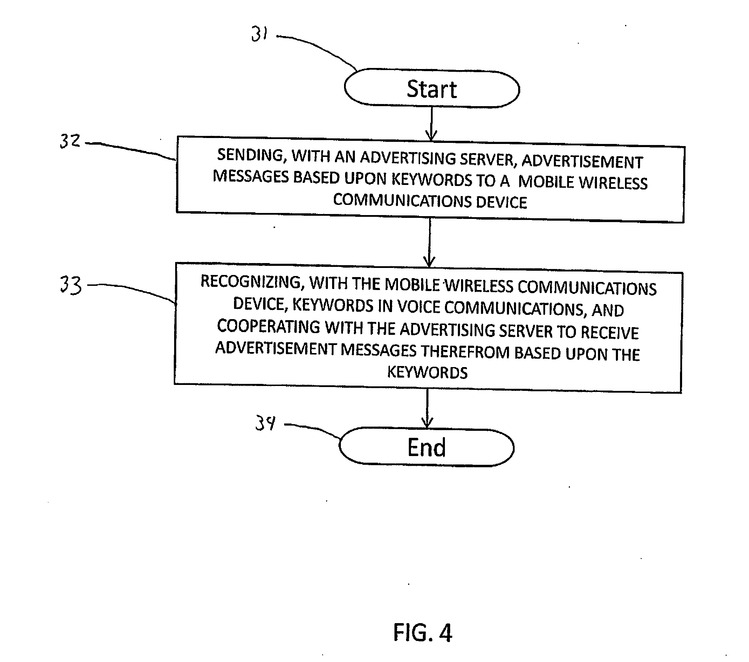

Referring now to flowchart **30** of FIG. 4, a method of operating a communications system in accordance with the present disclosure is now described. After the start (Block **31**), at Block **32**, advertisement messages based upon keywords are sent, with an advertising server, to a mobile wireless communications device.

At Block **33**, keywords in voice communications are recognized with the mobile wireless communications device, which cooperates with the advertising server to receive advertisement messages therefrom based upon the keywords. Block **34** indicates the end of the method.

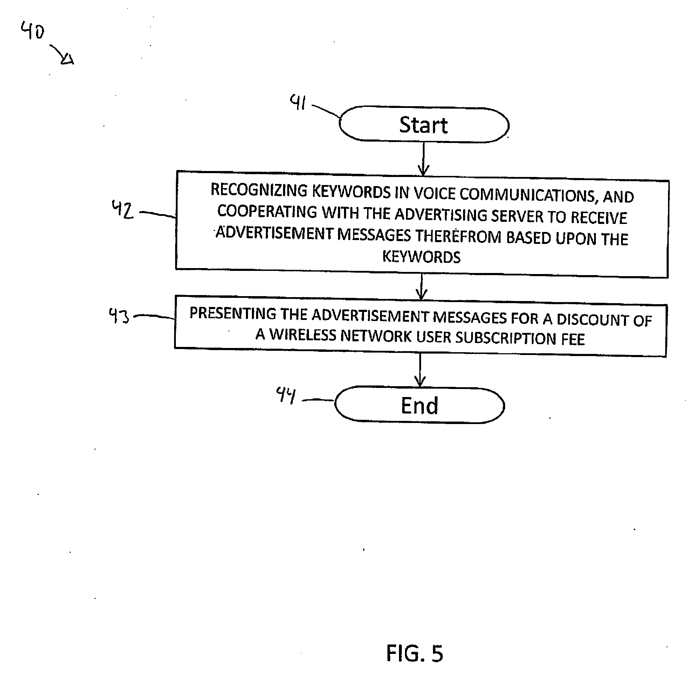

Referring now to flowchart **40** of FIG. 5, a method of using a mobile wireless communications device operable based upon payment of a wireless network user subscription fee to receive advertisement messages based upon keywords from an advertising server is now described. After the start (Block **41**), at Block **42**, keywords are recognized in voice communications and the mobile wireless communications device cooperates with the advertising server to receive advertisement messages therefrom based upon the key words.

At Block **43**, the advertisement messages are presented on a display for a discount of the wireless network user subscription free. Block **44** indicates the end of the method.

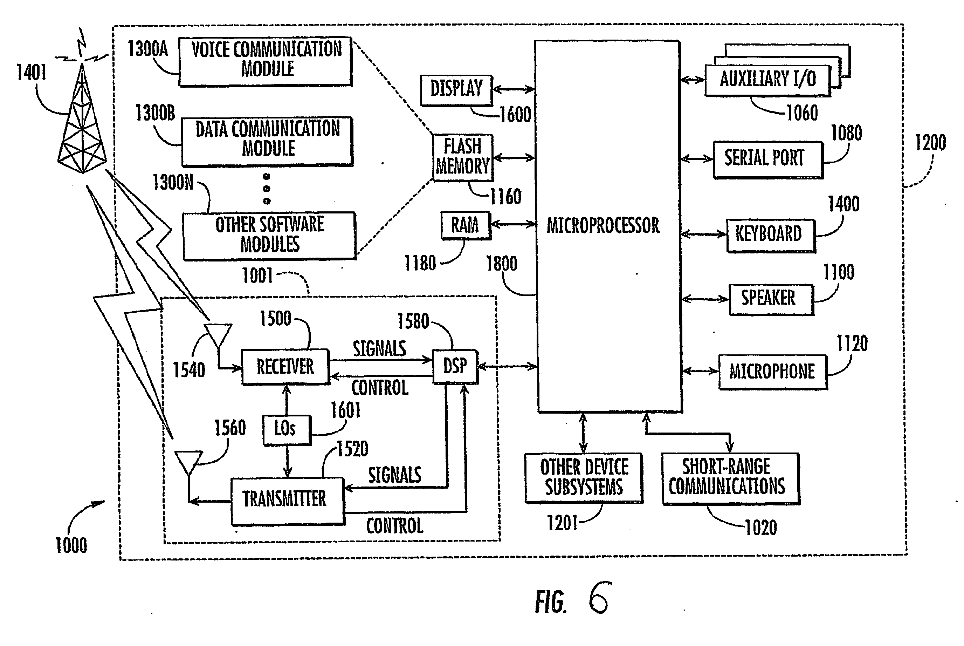

Exemplary components of a hand-held mobile wireless communications device **1000** that may be used in accordance with the communications system **10** are further described in the example below with reference to FIG. 6. The device **1000** illustratively includes a housing **1200**, a keypad **1400** and an output device **1600**. The output device shown is a display **1600,** which may include a full graphic LCD. In some **example** embodiments, display **1600** may include a touch-sensitive input and output device. Other types of output devices may alternatively be utilized. A processing device **1800** is contained within the housing **1200** and is coupled between the keypad **1400** and the display **1600**. The processing device **1800** controls the operation of the display **1600**, as well as the overall operation of the mobile device **1000**, in response to actuation of keys on the keypad **1400** by the user. In some example embodiments, keypad **1400** may include a physical keypad or a virtual keypad (e.g., using a touch-sensitive interface) or both.

The housing **1200** may be elongated vertically, or may take on other sizes and shapes (including clamshell housing structures). The keypad **1400** may include a mode selection key, or other hardware or software for switching between text entry and telephony entry.

In addition to the processing device **1800**, other parts of the mobile device **1000** are shown schematically in FIG. 6. These include a communications subsystem **1001**; a short-range communications subsystem **1020**; the keypad **1400** and the display **1600**, along with other input/output devices **1060**, **1080**, **1100** and **1120**; as well as memory devices **1160**, **1180** and various other device subsystems **1201**. The mobile device **1000** may include a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180**.

The processing device **1800**, in addition to its operating system functions, enables execution of software applications **1300A-1300N** on the device **1000**. A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with the device user's corresponding data items stored or associated with a host computer system.

Communication functions, including data and voice communications, are performed through the communications subsystem **1001**, and possibly through the short-range communications subsystem. The communications subsystem **1001** includes a receiver **1500**, a transmitter **1520**, and one or more antennas **1540** and **1560.** in addition, the communications subsystem **1001** also includes a processing module, such as a digital signal processor (DSP) **1580**, and local oscillator (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000**. The mobile device **1000** may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800**. The received signal is then further processed by the processing device **1800** for an output to the display **1600**, or alternatively to some other auxiliary I/O device **1060**. A device user may also compose data items, such as e-mail messages, using the keypad **1400** and/or some other auxiliary I/O device **1060**, such as a touchpad, a rocker switch, a thumb-wheel, track ball, or some other type of input device. The composed data items may then be transmitted over the communications network **1401** via the communications subsystem **1001**.

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices

Many modifications and other example embodiments of the present disclosure will come to the mind of one skilled in the art having the benefit of the teachings presented in the foregoing descriptions and the associated drawings. Regarding the methods illustrated in the flowcharts of FIGs. 4 and 5, some of the steps illustrated may be performed in an order other than that which is described. Also, it should be appreciated that not all of the steps described in these flow diagrams are required to be performed, that additional steps may be added, and that some of the illustrated steps may be substituted with other steps. Therefore, it is understood that this disclosure is not to be limited to the specific example embodiments disclosed, and that modifications and example embodiments are intended to be included within the scope of the appended claims.

## Claims

1. A communications system (10) comprising:
an advertising server (17) for sending advertisement messages based upon keywords; and
at least one mobile wireless communications device (12a-12n) comprising
a memory;
at least one audio transducer (21),
a wireless transceiver (20), and
a processor (24) cooperating with said
at least one audio transducer and said wireless transceiver for recognizing keywords in voice communications, and cooperating with said advertising server to receive advertisement messages therefrom based upon the keywords;
said processor of said at least one mobile wireless communications device also configured to
store the received advertisement messages in the memory,
present the received advertisement messages,
generate an advertisement message history based upon whether the received advertisement messages have been viewed, listened to, or skipped, and
send the advertisement message history to said advertising server;
said advertising server selectively sending a given advertisement message based upon the received advertisement message history.

2. The communications system (10) of Claim 1
wherein said at least one mobile wireless communications device (12a-12n) further comprises a display (13); and wherein said processor (24) visually presents received advertisement messages on said display.

3. The communications system (10) of Claim 1
wherein said processor (24) audibly presents received advertisement messages via said at least one audio transducer (21).

4. The communications system (10) of Claim 1
wherein said processor (24) presents a given received advertising message during an associated voice communication.

5. The communications system (10) of Claim 1
wherein said at least one mobile wireless communications device (12a-12n) further comprises at least one input device (22) cooperating with said processor (24) to permit user selection of presentation of a given received advertising message.

6. The communications system (10) of Claim 1
wherein said processor (24) presents a given stored received advertising message after an associated voice communication.

7. A mobile wireless communications device (12a) to receive advertisement messages based upon keywords from an advertising server (17) comprising:
a memory;
at least one audio transducer (21);
a wireless transceiver (20) ; and
a processor (24) cooperating with said at least one audio transducer and said wireless transceiver for
recognizing keywords in voice communications,
cooperating with the advertising server (17) to receive advertisement messages therefrom based upon the keywords and an advertisement message history,
store the received advertisement messages in the memory,
present the received advertisement messages,
generate an advertisement message history based upon whether the received advertisement messages have been viewed, listened to, or skipped, and
send the advertisement message history to said advertising server.

8. The mobile wireless communications device (12a) of Claim 7 wherein said at least one mobile wireless communications device (12a-12n) further comprises a display (13); and wherein said processor (24) visually presents received advertisement messages on said display.

9. The mobile wireless communications device (12a) of Claim 7 wherein said processor (24) presents a given received advertising message during an associated voice communication.

10. The mobile wireless communications device (12a) of Claim 7 wherein said processor presents a given stored received advertising message after an associated voice communication.

11. A method of operating a communications system (10) comprising:
sending, with an advertising server (17), advertisement messages based upon keywords to at least one mobile wireless communications device (12a-12n);
recognizing, with the at least one mobile wireless communications device, keywords in voice communications, and cooperating with the advertising server to receive advertisement messages therefrom based upon the keywords;
storing the received advertisement messages in a memory of the at least one mobile wireless communications device;
presenting the received advertisement messages using the at least one mobile wireless communications device;
generating an advertisement message history based upon whether the received advertisement messages have been viewed, listened to, or skipped using the at least one mobile wireless communications device;
sending the advertisement message history to the advertising server using the at least one mobile wireless communications device; and
the advertising server selectively sending a given advertisement message based upon the received advertisement message history.

12. The method of Claim 11 further comprising
operating the at least one mobile wireless communications device (12a-12n) based upon payment of a wireless network user subscription fee; and
presenting, with the at least one mobile wireless communications device, the advertisement messages for a discount of the wireless network user subscription fee.

13. The method of Claim 12 further comprising receiving, via an input device (22) of the at least one mobile wireless communications device (12a-12n), user selection of presentation of a given received advertising message and altering the discount of the wireless network user subscription fee based upon the selection.

## Patentansprüche

1. Ein Kommunikationssystem (10), das aufweist:
einen Werbungsserver (17) zum Senden von Werbenachrichten basierend auf Schlüsselwörtern; und
zumindest eine mobile drahtlose Kommunikationsvorrichtung (12a-12n),
die aufweist
einen Speicher;
zumindest einen Audio-Transducer (21),
einen drahtlosen Transceiver (20), und
einen Prozessor (24), der mit dem zumindest einen Audio-Transducer und dem drahtlosen Transceiver zusammenarbeitet zum Erkennen von Schlüsselwörtern in Sprachkommunikationen und mit dem Werbungsserver zusammenarbeitet zum Empfangen von Werbenachrichten von diesem basierend auf den Schlüsselwörtern;
wobei der Prozessor der zumindest einen mobilen drahtlosen Kommunikationsvorrichtung auch konfiguriert ist zum
Speichern der empfangenen Werbenachrichten in dem Speicher, Präsentieren der empfangenen Werbenachrichten,
Erzeugen einer Werbenachrichtenhistorie basierend darauf, ob die empfangenen Werbenachrichten angesehen, abgehört oder übersprungen wurden, und
Senden der Werbenachrichtenhistorie an den Werbungsserver;
wobei der Werbungsserver eine gegebene Werbenachricht selektiv basierend auf der empfangenen Werbenachrichtenhistorie sendet.

2. Das Kommunikationssystem (10) gemäß Anspruch 1, wobei die zumindest eine mobile drahtlose Kommunikationsvorrichtung (12a-12n) weiter eine Anzeige (13) aufweist; und wobei der Prozessor (24) empfangene Werbenachrichten auf der Anzeige visuell präsentiert.

3. Das Kommunikationssystem (10) gemäß Anspruch 1, wobei der Prozessor (24) empfangene Werbenachrichten über den zumindest einen Audio-Transducer (21) hörbar präsentiert.

4. Das Kommunikationssystem (10) gemäß Anspruch 1, wobei der Prozessor (24) eine gegebene empfangene Werbenachricht während einer assoziierten Sprachkommunikation präsentiert.

5. Das Kommunikationssystem (10) gemäß Anspruch 1, wobei die zumindest eine mobile drahtlose Kommunikationsvorrichtung (12a-12n) weiter zumindest eine Eingabevorrichtung (22) aufweist, die mit dem Prozessor (24) zusammenarbeitet, um eine Benutzerauswahl einer Präsentation einer gegebenen empfangenen Werbenachricht zu ermöglichen.

6. Das Kommunikationssystem (10) gemäß Anspruch 1, wobei der Prozessor (24) eine gegebene gespeicherte empfangene Werbenachricht nach einer assoziierten Sprachkommunikation präsentiert.

7. Eine mobile drahtlose Kommunikationsvorrichtung (12a) zum Empfangen von Werbenachrichten basierend auf Schlüsselwörtern von einem Werbungsserver (17), die aufweist:
einen Speicher;
zumindest einen Audio-Transducer (21);
einen drahtlosen Transceiver (20); und
einen Prozessor (24), der mit dem zumindest einen Audio-Transducer und
dem drahtlosen Transceiver zusammenarbeitet zum Erkennen von Schlüsselwörtern in Sprachkommunikationen,
Zusammenarbeiten mit dem Werbungsserver (17) zum Empfangen von Werbenachrichten von diesem basierend auf den Schlüsselwörtern und
einer Werbenachrichtenhistorie,
Speichern der empfangenen Werbenachrichten in dem Speicher,
Präsentieren der empfangenen Werbenachrichten,
Erzeugen einer Werbenachrichtenhistorie basierend darauf, ob die empfangenen Werbenachrichten angesehen, abgehört oder übersprungen wurden, und
Senden der Werbenachrichtenhistorie an den Werbungsserver.

8. Die mobile drahtlose Kommunikationsvorrichtung (12a) gemäß Anspruch 7, wobei die zumindest eine mobile drahtlose Kommunikationsvorrichtung (12a-12n) weiter eine Anzeige (13) aufweist; und wobei der Prozessor (24) empfangene Werbenachrichten auf der Anzeige visuell präsentiert.

9. Die mobile drahtlose Kommunikationsvorrichtung (12a) gemäß Anspruch 7, wobei der Prozessor (24) eine gegebene empfangene Werbenachricht während einer assoziierten Sprachkommunikation präsentiert.

10. Die mobile drahtlose Kommunikationsvorrichtung (12a) gemäß Anspruch 7, wobei der Prozessor eine gegebene gespeicherte empfangene Werbenachricht nach einer assoziierten Sprachkommunikation präsentiert.

11. Ein Verfahren zum Betreiben eines Kommunikationssystems (10), das aufweist:
Senden, mit einem Werbungsserver (17), von Werbenachrichten basierend auf Schlüsselwörtern an zumindest eine mobile drahtlose Kommunikationsvorrichtung (12a-12n);
Erkennen, mit der zumindest einen mobilen drahtlosen Kommunikationsvorrichtung, von Schlüsselwörtern in Sprachkommunikationen und Zusammenarbeiten mit dem Werbungsserver zum Empfangen von Werbenachrichten von diesem basierend auf den Schlüsselwörtern;
Speichern der empfangenen Werbenachrichten in einem Speicher der zumindest einen mobilen drahtlosen Kommunikationsvorrichtung;
Präsentieren der empfangenen Werbenachrichten unter Verwendung der zumindest einen mobilen drahtlosen Kommunikationsvorrichtung;
Erzeugen einer Werbenachrichtenhistorie basierend darauf, ob die empfangenen Werbenachrichten angesehen, abgehört oder übersprungen wurden, unter Verwendung der zumindest einen mobilen drahtlosen Kommunikationsvorrichtung;
Senden der Werbenachrichtenhistorie an den Werbungsserver unter Verwendung der zumindest einen mobilen drahtlosen Kommunikationsvorrichtung; und
wobei der Werbungsserver selektiv eine gegebene Werbenachricht basierend auf der empfangenen Werbenachrichtenhistorie sendet.

12. Das Verfahren gemäß Anspruch 11, das weiter aufweist Betreiben der zumindest einen mobilen drahtlosen Kommunikationsvorrichtung (12a - 12n) basierend auf einer Bezahlung einer Abonnementgebühr eines Benutzers eines drahtlosen Netzwerks; und Präsentieren, mit der zumindest einen mobilen drahtlosen Kommunikationsvorrichtung, der Werbenachrichten für einen Preisnachlass auf die Abonnementgebühr eines Benutzers eines drahtlosen Netzwerks.

13. Das Verfahren gemäß Anspruch 12, das weiter aufweist ein Empfangen, über eine Eingabevorrichtung (22) der zumindest einen mobilen drahtlosen Kommunikationsvorrichtung (12a - 12n), einer Benutzerauswahl einer Präsentation einer gegebenen empfangenen Werbenachricht und Verändern des Preisnachlasses auf die Abonnementgebühr eines Benutzers eines drahtlosen Netzwerks basierend auf der Auswahl.

## Revendications

1. Système de communications (10) comprenant :
un serveur de publicité (17) destiné à envoyer des messages publicitaires sur la base de mots clés ; et
au moins un dispositif de communications sans fil mobile (12a-12n) comprenant :
une mémoire ;
au moins un transducteur audio (21),
un émetteur-récepteur sans fil (20) ; et
un processeur (24) coopérant avec ledit au moins un transducteur audio et ledit émetteur-récepteur sans fil pour reconnaître des mots clés dans des communications vocales, et coopérer avec ledit serveur de publicité pour en recevoir des messages publicitaires sur la base de mots clés ;
ledit processeur dudit au moins un dispositif de communications sans fil mobile étant également configuré pour :
stocker dans la mémoire les messages publicitaires reçus,
présenter les messages publicitaires reçus,
générer un historique des messages publicitaires sur la base du fait que les messages publicitaires reçus ont ou non été visualisés, écoutés ou sautés, et
envoyer l'historique de messages publicitaires audit serveur de publicité ;
ledit serveur de publicité envoyant sélectivement un message publicitaire donné sur la base de l'historique de messages publicitaires reçus.

2. Système de communications (10) selon la revendication 1, dans lequel ledit au moins un dispositif de communications sans fil mobile (12a-12n) comprend en outre un dispositif d'affichage (13) ; et dans lequel ledit processeur (24) présente visuellement des messages publicitaires reçus sur ledit dispositif d'affichage.

3. Système de communications (10) selon la revendication 1, dans lequel ledit processeur (24) présente de manière audible des messages publicitaires reçus par l'intermédiaire dudit au moins un transducteur audio (21).

4. Système de communications (10) selon la revendication 1, dans lequel ledit processeur (24) présente un message publicitaire reçu donné pendant une communication vocale associée.

5. Système de communications (10) selon la revendication 1, dans lequel ledit au moins un dispositif de communications sans fil mobile (12a-12n) comprend en outre au moins un dispositif d'entrée (22) coopérant avec ledit processeur (24) pour permettre une sélection par l'utilisateur d'une présentation d'un message publicitaire reçu donné.

6. Système de communications (10) selon la revendication 1, dans lequel ledit processeur (24) présente un message publicitaire reçu stocké donné après une communication vocale associée.

7. Dispositif de communications mobile sans fil (12a) destiné à recevoir des messages publicitaires sur la base de mots clés d'un serveur de publicité (17) comprenant :
une mémoire ;
au moins un transducteur audio (21) ;
un émetteur-récepteur sans fil (20) ; et
un processeur (24) coopérant avec ledit au moins un transducteur audio et avec ledit émetteur-récepteur sans fil pour
reconnaître des mots clés dans des communications vocales,
coopérer avec le serveur de publicité (17) pour en recevoir des messages publicitaires sur la base des mots clés et d'un historique de messages publicitaires,
stocker les messages publicitaires reçus dans la mémoire,
présenter les messages publicitaires reçus,
générer un historique des messages publicitaires sur la base du fait que les messages publicitaires reçus ont ou non été visualisés, écoutés ou sautés, et
envoyer l'historique de messages publicitaires audit serveur de publicité.

8. Dispositif de communications sans fil mobile (12a) selon la revendication 7, dans lequel ledit au moins un dispositif de communications sans fil mobile (12a-12n) comprend en outre un dispositif d'affichage (13) ; et dans lequel ledit processeur (24) présente visuellement des messages publicitaires reçus sur ledit dispositif d'affichage.

9. Dispositif de communications sans fil mobile (12a) selon la revendication 7, dans lequel ledit processeur (24) présente un message publicitaire reçu donné pendant une communication vocale associée.

10. Dispositif de communications sans fil mobile (12a) selon la revendication 7, dans lequel ledit processeur présente un message publicitaire reçu stocké donné après une communication vocale associée.

11. Procédé de mise en fonctionnement d'un système de communications (10) consistant à :
envoyer, au moyen d'un serveur de publicité (17), des messages publicitaires sur la base de mots clés à au moins un dispositif de communications sans fil mobile (12a-12n) ;
reconnaître, au moyen du dispositif de communications sans fil mobile, des mots clés dans les communications vocales, et coopérer avec le serveur de publicité pour en recevoir des messages publicitaires sur la base des mots clés ;
stocker les messages publicitaires reçus dans une mémoire de l'au moins un dispositif de communications sans fil mobile,
présenter les messages publicitaires reçus en utilisant l'au moins un dispositif de communications sans fil mobile,
générer un historique de messages publicitaires sur la base du fait que les messages publicitaires reçus ont ou non été visualisés, écoutés ou sautés au moyen de l'au moins un dispositif de communications sans fil mobile,
envoyer l'historique de messages publicitaires au serveur de publicité en utilisant l'au moins un dispositif de communications sans fil mobile ; et
faire en sorte que le serveur de publicité envoie sélectivement un message publicitaire donné sur la base de l'historique de messages publicitaires reçus.

12. Procédé selon la revendication 11, consistant en outre à :
mettre en fonctionnement l'au moins un dispositif de communications sans fil mobile (12a-12n) sur la base d'un paiement d'un abonnement d'un utilisateur à un réseau sans fil ; et
présenter, au moyen de l'au moins un dispositif de communications sans fil mobile, les messages publicitaires pour obtenir une remise sur l'abonnement d'un utilisateur du réseau sans fil.

13. Procédé selon la revendication 12, consistant en outre à recevoir, par l'intermédiaire d'un dispositif d'entrée (22) de l'au moins un dispositif de communications sans fil mobile (12a-12n), une sélection par l'utilisateur d'une présentation d'un message publicitaire reçu donné et l'annonce de la remise sur l'abonnement de l'utilisateur du réseau sans fil sur la base de la sélection.
